# EUROPEAN PATENT APPLICATION

(11) **EP 1 265 405 A1**
(43) Date of publication of application: **11.12.2002**
(21) Application number: 00987778.8
(22) Date of filing: 27.12.2000
(51) Int. Cl.: H04L 12/46

(54) **ROUTING PROCESSING AND METHOD FOR HOME BUS SYSTEM**

(71) Applicant: MATSUSHITA ELECTRIC INDUSTRIAL CO., LTD., Kadoma-shi, Osaka 571-8501 (JP)
(72) Inventor: UENO, Reiko, Takarazuka-shi, Hyogo 665-0835 (JP); SHINTANI, Yasuyuki, Kobe-shi, Hyogo 658-0082 (JP)
(74) Representative: Dempster, Benjamin John Naftel
(86) International application number: JP0009366
(87) International publication number: WO02054682

(57) **Abstract**

In a home bus system in which a multiplicity of networks each having a multiplicity of appliances connected thereto are connected one another, information is easily exchanged between appliances over different networks.

An address configuration that is processed in application software and communication middleware has a network ID and a network appliance ID.

On each network, there is provided a particular router having information about all the connections of other networks than the each network. Under this configuration, an appliance transmits a message directed to another network, only to a particular router and the particular router establishes an appropriate route for transmission, as considering the actual states of the networks.

## Description

### TECHNICAL FIELD

The present invention relates to so-called a home network, and more particularly to protocols and processes for accurate data transmission from an appliance on a network to an appliance on another network.

### BACKGROUND ART

### (General background arts)

In recent years, various many appliances are used in houses, buildings, and on the floors and in the sections in the buildings. Attempts have been made to control such appliances by integrating them into a home network (or a home bus system) in order to attain a better living or working environment, less energy consumption, and good work efficiency.

Specifically, a home uses, for example, an air conditioner, a refrigerator, an electric fan, a bath water heater utilizing solar heat, a microwave oven, a water heater, an electric *kotatsu* (Japanese heating apparatus comprising a low table with an electric heater underneath), a warm air circulator, a clock, a television receiver, a lighting apparatus, and the like. Since the time and the season in which these appliances are used are highly interrelated, the operating conditions are taken into consideration and thus the operations and standby states of these appliances are suitably controlled in order to achieve improvement of a living environment and energy saving.

More specifically, in the summer season, water heater thermostat of a water heater in bathing hours is set at a lower temperature than in the winter season since a water heater for bath utilizing solar heat can often produce sufficient hot water and thus the temperature needs not be so high; even in the summer season the operation of an air conditioner is lowered during a very short time in which a microwave oven is used in order to reduce the electric power consumed at one time in a home as a whole; or in a room, output power or transmission of an air conditioner is controlled by detecting the presence of a human in the room with a sensor.

Other examples are such that operating conditions of appliances serving as heat sources that are being in operation (in use) are detected and the output power of an air conditioner is controlled accordingly; unnecessary lightings in a room are turned off based on the hours and positions of appliances in operation (in use); and in a college, lightings and air conditioners are turned off in the classrooms in which classes are not being conducted.

Moreover, in addition to merely controlling the starting and stopping of appliances according to the season and the time, attempts are being considered and made to carry out caretaking and surveillance of homes in which only the elderly are present or of infants when parents are absent by detecting the operating conditions. Specifically, abnormality is detected and a home help service person is contacted over the telephone network if, for example, the toilet door is not opened or closed for a certain period, if the sound volume of the television is too loud, or if various appliances are unnaturally operated, for example, if an air cooling appliance and a heater are simultaneously operated; or when a mobile telephone carried by a child goes out of the home, it sends out a warning through an audio message or the screen of a television receiver.

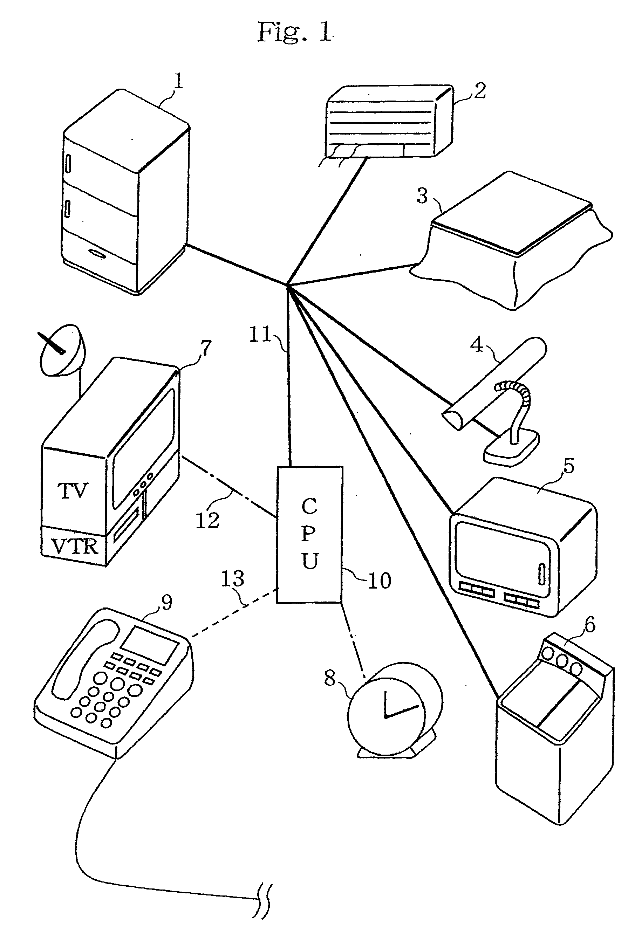

Connections of various appliances to achieve the above are schematically shown in Fig. 1.

In the figure, a refrigerator 1, an air conditioner 2, an electric *kotatsu* 3, a fluorescent lamp 4, a microwave oven 5, and a washing machine 6 are connected to a CPU 10 by a power line 11, thus making up a (sub) network. A television receiver 7 and a clock 8 are connected to the CPU 10 by infrared rays 12, thus making up a (sub) network. A telephone 9 is connected to the CPU 10 by radio 13, thus making up a (sub) network.

In addition to the above, appliances may be connected by other means such as ultrasonic waves or may be connected by a plurality of means.

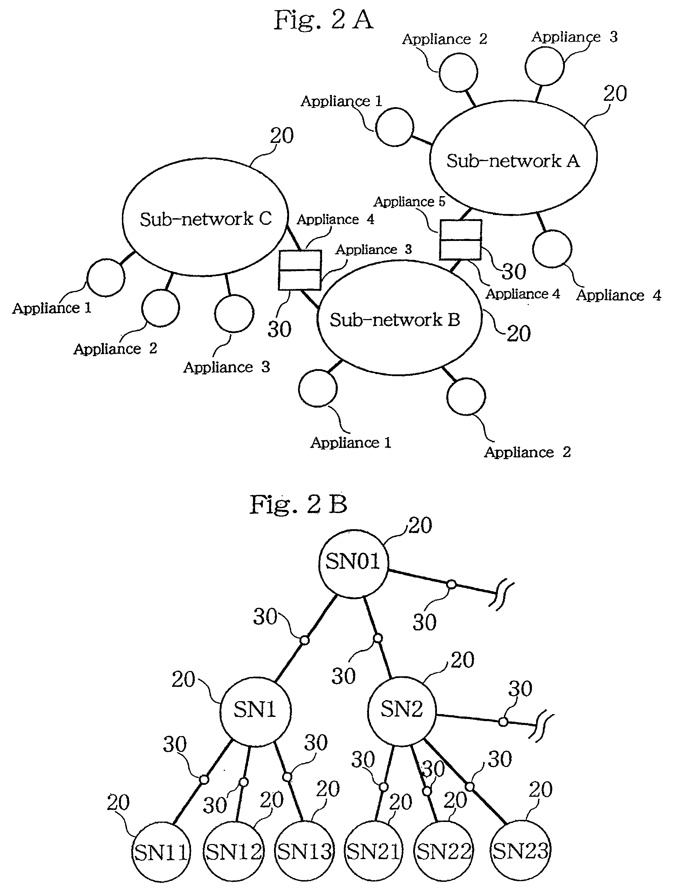

Further, the network may have other configurations than the one shown in the figure in which many appliances and sub-network are connected radially from only one CPU 10, but, as shown in Fig. 2A, many sub-networks each having a controller (not shown in the figure) and a router (a router is placed between a plurality of sub-networks to realize communication therebetween, and in Fig. 1, the CPU performs this function. In different systems and appliances, IC circuits or the like built into appliances perform this function.) are connected via a router provided in the edge parts of each constituent element of the sub-networks or via an appliance that performs the function of a router, or as shown in Fig. 2B, appliances and sub-networks are hierarchically connected as it were, forming trees.

In the figure, reference numerals 20 denote networks, or appliances that practically serves as sub-networks, which are connected by infrared rays, power line, radio, or the like, and reference numerals 30 denote routers, or appliances that perform the function of routers, which are connected to a plurality of sub-networks.

At smaller scales, it is employed in such a simple combination in which, in the case where a television receiver is connected to a VTR, the VTR reads out a time signal received by the television receiver in order to display accurate time and makes corrections as necessary.

Furthermore, in order to effectively exert the functions of the networks, various standards and plans (such as ET - 2101 and JEM - 1439) have been established and proposed by the Electronic Industries Association of Japan, the Japan Electrical Manufacturers' Association, and the like.

Moreover, protocols (standards for communication) and the like have been determined or developed.

In view of these, it of course has been considered and carried out that appliances (including sensors or the like) are provided with necessary equipment and functions, such as a communication processing function during manufacturing so that they can perform suitable functions in a home network.

### (Background arts in view of the problems to be solved by the present invention)

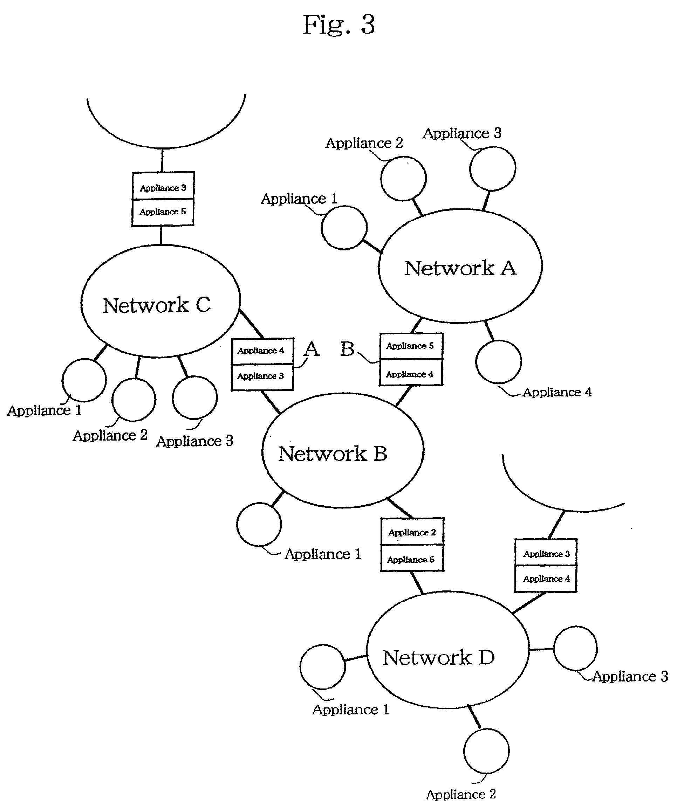

However, when appliances and networks are connected in such a manner as shown in Figs. 2A and 3, a problem arises in exchanging information between the appliances.

Specifically, for example, in the case where an appliance 1 on a network B wants to transmit a message to an appliance 2 on a network C, shown in Fig. 3, first the appliance 1 needs to know to which router (either router A or B) within the network B the appliance should transmit the message (which implies a telegraphic message and uses, as the communication medium, sound, infrared rays, or the like) so that the appliance 2 on the network C receives the message. Thus, the appliance 1 needs to be fully equipped with a means (communication means) for that purpose. As a result, not only the load of the appliance side increases, that in the initial setting of communication also increases.

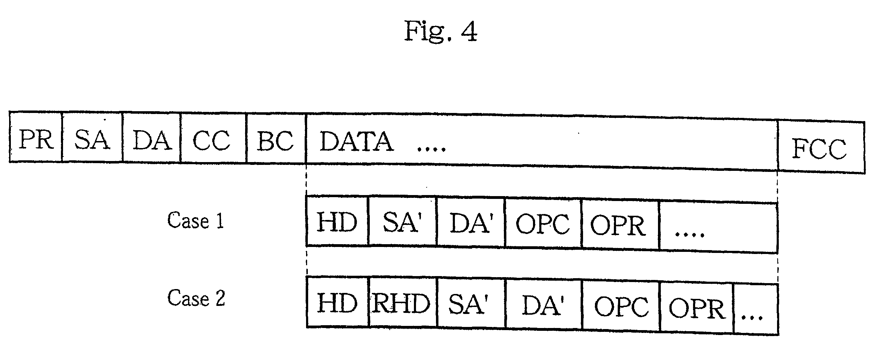

As for the configuration of a message for the above case, a message that is first transmitted by an appliance on the network B is such as that shown in Fig. 4. In the figure:
PR stands for a priority code (a code for designating priorities or the like to messages);
SA stands for a source physical address (an address on the same network (identification code, ID));
DA stands for a destination physical address (an address on the same network);
CC stands for a control code (a code for designating a DATA region format or the like);
BC stands for a byte count code (a code for designating the size of the DATA region);
FCC stands for a frame check code (a code for checking errors of a message frame);
HD stands for a header code (a code for designating the presence or absence of the code such as SA', DA', or the like);
SA' stands for a sub-bus source physical address (a physical address of a source appliance on a different network);
DA' stands for a sub-bus destination physical address (a physical address of a destination appliance on a different network);
OPC stands for an operation code (command code);
OPR stands for an operand code (a code for specifying details of a command); and
RHD stands for routing information (information about GWs or routers in the case of transmission via a plurality of networks).

In order to achieve proper transmission and reception of a message, as shown in a case of Fig. 4, the message should be such that the address information or identification code (ID) of the appliance 1 on the network B is assigned to SA, the address information of the router B (appliance 3) on the network B to DA, no address information to SA', and the address information of the appliance 2 on the network C to DA'. In response to such a message, a message is received in which the address information of the router B (appliance 3) is assigned to SA, the address information of the appliance 1 on the network B to DA, the address information of the appliance 2 on the network C to SA', and no address information to DA'.

In the case where an appliance on the sub-network A transmits a message to another appliance on the network C, as shown in case 2 in Fig. 4, information about the routers A and B via which the message is exchanged needed to be set in RHD.

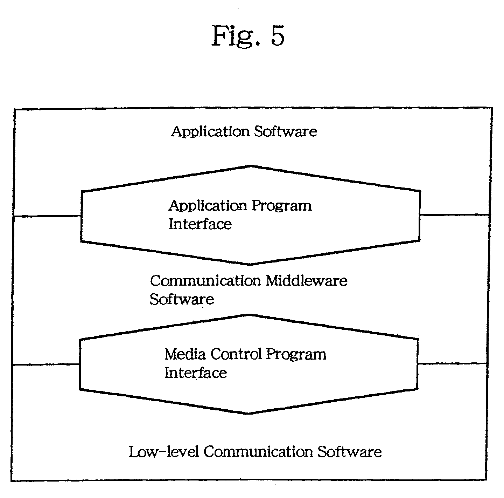

Accordingly, in the communication middleware structure of a home bus system such as that shown in Fig. 5, in order for a communication middleware processing part to compose a message based on information from an application processing part, it was conventionally required that an application program processing person grasp the network configuration and the addresses of appliances on the network of the destination appliance so as to compose the message having such information. In addition, the application program processing person needed to grasp information about gateways (routers) to transmit the message (Note that the term "software" in the figure also implies "a part for performing and processing the software").

However, in practice, it is quite difficult to realize such conditions. Leastwise, in a home rather than in a home bus system, not only communication means are limited, but also appliances to be included or possessed are added or eliminated one after another, which makes it impossible to understand the above-described information correctly.

Particularly, in a hospital room, a nursing home for the aged, and the like, there are many identical appliances, and on the other hand, the functions of the appliances are different in each room and changeable.

Accordingly, there has been a demand for development of a technique with which necessary data can be exchanged easily between appliances on the networks, without the need to grasp the above-described information.

### DISCLOSURE OF THE INVENTION

It is an object of the present invention to solve the foregoing problems, and an address configuration to be processed in application software and communication middleware has an "appliance ID" composed of a "network ID" and a "network appliance ID". Moreover, this address information is provided in a data region of a message exchanged on the network, and furthermore, in the case where an appliance transmits a message to another appliance whose network ID information is different from the appliance, the message is transmitted in a manner such that a destination address (which is represented by DA in the example) on the network of the source appliance is made to be the address of a particular router.

On the particular router, information about all routers is held so that an address of a router to which a received message is next to be passed is extracted from network ID information provided in DNA in the message, and then the message is forwarded to the router. In addition, when the received message is directed to an appliance on the other network of the particular router, the message is passed to the appliance.

More detailed configurations are discussed below.

In a first aspect of the present invention, first an appliance may have two levels of IDs composed of an ID of a network to which the appliance belongs and an appliance ID on the network. Next, when the appliance transmits a message (including a signal message by an ultrasonic wave, infrared rays, and the like) to a different network appliance, if there are, on the same network, a plurality of routers arranged between a plurality of networks to allows for communication between the networks, the message may be transmitted to a particular router so that the particular router transmits the received message to another router on the most suitable route for transmission. Thus, only a particular router on each network needs to grasp what kinds of appliances and routers are connected to each of networks, connections between networks, and the like.

Moreover, it can be also said that flexibility is increased because IDs are written in the DATA region.

Furthermore, sensors or the like for fire, gas, and the like can be installed anywhere such as in a hospital, a Japanese inn, and the like with solely a sensor and a source of power, and the costly attachment of lines for use in the notification of detection results becomes unnecessary.

With regard to outfitted sensors or the like plugged in a multiple outlet, different kinds of communication media and frequencies are used in transmission and reception, and detection results are transmitted at frequencies receivable only by a router so that only the router can receive the detection results.

In a second aspect of the present invention, each appliance may have two levels of IDs, as is the first aspect of the present invention, and when the appliance transmits a message to a different network appliance, the appliance may query a particular router on the same network for to which one of appliances on a network to which the appliance belongs the message is to be transmitted. Thereafter, the message may be transmitted to another appliance designated by an answer to the query.

On the other hand, the particular router includes information about all network connections to be able to answer such a query. The particular router answers by referring the information. Thus, the processing of the message is not necessary, making it possible to answer without delay even in the case of a concentration of queries to the particular router.

Next, since the main operation, in each aspect of the present invention, is conducted at a communication middleware part, the workload for operators is eliminated in various ways, and a particular router and its operation can be freely changed in terms of software.

In addition, other than those described above, it is to be understood that the configuration of a message and the like are determined by protocols.

Also, flexibility in the attachment of a sensor and the like is increased.

Also, it becomes possible that sensors and the like capable of using a plurality of frequencies give a notification directly to a center at specific frequencies in an emergency.

Moreover, when carrying out each aspect of the present invention, actual states are considered such as the purposes of a network in a home, an office, and a hospital, and the contents or the like of a message in each of the appliances or constituent element appliances and the like.

Furthermore, when carrying out each aspect of the present invention, it is often the case that the purpose of a network in a home, an office, and the like is to put restrictions on the total electric power consumed at a time to a certain level, and in order to accomplish the purpose, consideration is given to the features and properties of power-consuming appliances associated with the operation and use thereof and the contents and destinations of a message in accordance with the features and properties.

### BRIEF DESCRIPTION OF THE DRAWINGS

Fig. 1 shows an example of the configuration of a conventional home bus system.

Figs. 2A and 2B show examples of the configurations of other conventional home bus systems.

Fig. 3 shows an example of the configuration of a home bus system intended for the present invention.

Fig. 4 is a diagram showing the configuration of a message in a conventional home bus system.

Fig. 5 is a diagram showing the structure of communication middleware of a home bus system.

Fig. 6A is a diagram showing a basic concept of the present invention, and Fig. 6B is a diagram showing the configuration of a message utilizing the basic concept.

Fig. 7 is a diagram showing the configuration of a transmission system of an appliance in accordance with Embodiment 1 of the present invention.

Fig. 8 is a diagram showing the configuration of a transmission system of a particular router on each network.

Fig. 9A is a correspondence table showing a destination network of a particular router on each network and a forwarding appliance, and Fig. 9B is a diagram showing steps to determine a forwarding appliance.

Figs. 10A and 10B are diagrams showing the configurations of the transmission system of an appliance in accordance with Embodiment 2 of the present invention.

Fig. 11 is a configuration view of a particular router in accordance with Embodiment 2.

Fig. 12 is a diagram showing the configurations of transmission systems of sensors in accordance with Embodiment 3 of the present invention.

Fig. 13 is a diagram illustrating transmission grades in a sensor in accordance with Embodiment 3 of the present invention.

### (Description of the reference numerals)

- 1: Refrigerator
- 2: Air conditioner
- 3: Electric *kotatsu*
- 4: Lighting apparatus
- 5: Microwave oven
- 6: Washing machine
- 7: Television and VTR
- 8: Clock
- 9: Telephone
- 10: CPU
- 11: Power line
- 12: Infrared rays
- 13: Radio
- 15: Sensor
- 20: Sub-network
- 30: Router
- 40: General appliance
- 41: Application processing part (software)
- 411: Message body creation part
- 42: Target network ID analysis part
- 421: Destination network ID determination part
- 43: Router information holding part
- 431: Particular router query part
- 44: Low-level communication processing part
- 441: Destination appliance transmission part
- 50: Particular router in each network
- 51: All router information holding part
- 52: Target network ID analysis part
- 521: Destination appliance determination part
- 53: Low-level communication processing part
- 531: Reception part
- 54: Low-level communication processing part
- 541: Notification part

### BEST MODE FOR CARRYING OUT THE INVENTION

The present invention will be described below referring to the embodiments thereof.

### EMBODIMENT 1

In the present embodiment, when an appliance transmits a message or necessary information to another appliance on a different network, the appliance transmits a message or necessary information to a particular router among a plurality of routers connected to a network to which the appliance is connected, and this particular router analyzes an appropriate communication route and then processes the message.

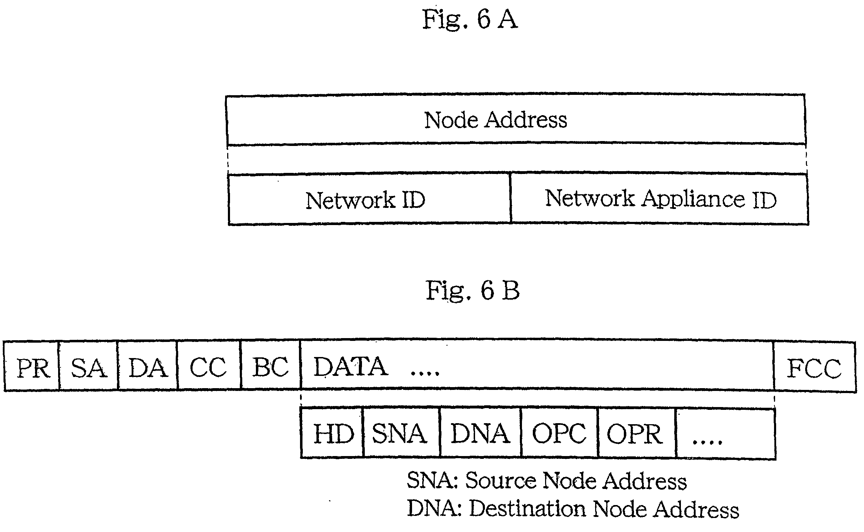

Fig. 6A shows an example of the configuration of an address of the present embodiment and Fig. 6B shows an example of the configuration of a message. Note that the source and destination node addresses shown in Fig. 6A correspond to SNA and DNA shown in Fig. 6B, respectively. As is clear from the drawings, the configuration of an address processed in application software and communication middleware shown in Fig. 4 is such that an appliance ID is composed of a network ID and a network appliance ID.

In addition, as shown in Fig. 6B, this address information is provided in the data region of a message exchanged on networks. In the case where a source appliance transmits a message to an appliance on a network having a different network ID from the source appliance, the message is configured such that a destination address (DA) on the network of the source appliance is made to be the address of a predetermined particular router on the network of the source appliance.

That is to say, when a router, especially an appliance other than a particular router, transmits a message to a different network appliance, a source appliance always transmits a message to the particular router, except for the case where the message is transmitted to an appliance on the other one of the networks connected to the source appliance.

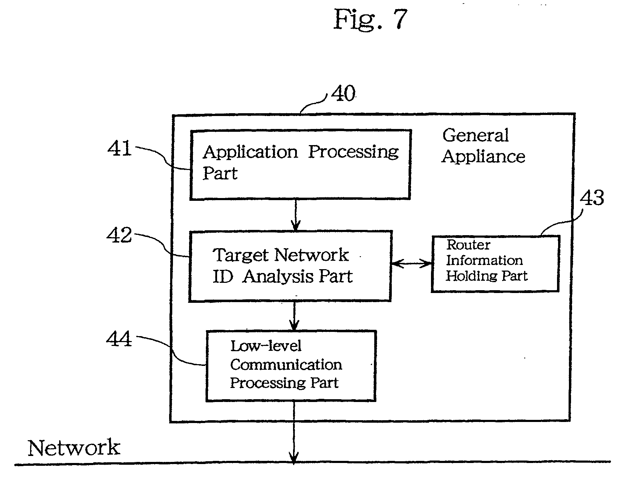

Fig. 7 shows a configuration of a general appliance which is not a router (mainly showing a communication middleware part according to the present invention). In the figure, reference numeral 40 denotes an entire view of the general appliance, 41 an application processing part of the appliance, 42 a target network ID analysis part of the appliance, 43 a router information holding part of the appliance, and 44 a low-level communication processing part of the appliance.

The application processing part 41 creates a message including mainly data to be transmitted.

The target network ID analysis part 42 provided in communication middleware software makes a decision on whether or not the destination is a different network appliance, by referring to the router information holding part 43. Note that the router information holding part 43 holds information only about appliances on a network to which the general appliance belongs. When the destination is an appliance on the same network, a message is passed to the appliance. As a matter of course, if the appliance is a router other than a particular router, a message is passed to another appliance to which the appliance and a plurality of networks are connected and through which the message is passed.

When the destination is an appliance on a different network, a message is passed to a particular router on the same network as the source appliance via the low-level communication processing part 44.

Next, the processing of the particular router will be described.

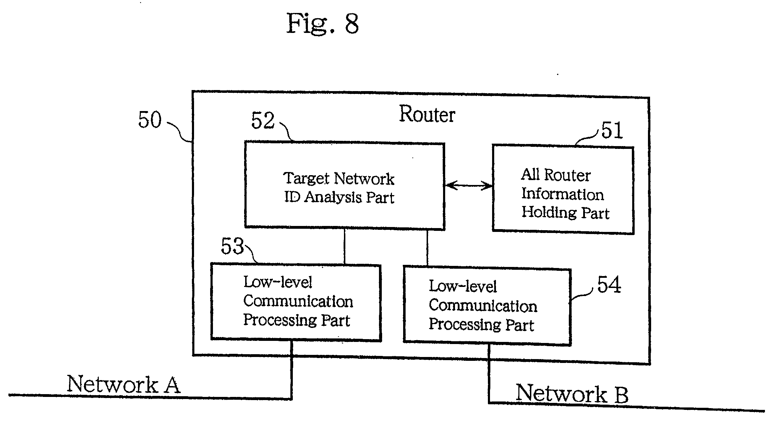

Fig. 8 is a configuration view of a particular router provided, one each per network. In the figure, reference numeral 50 denotes a main body of a router, 51 an all router information holing part, 52 a target network ID analysis part, and 53 and 54 low-level communication processing parts. The operations of such parts will be described below.

When the low-level communication part processing 53 of a particular router receives a message from an appliance on the same network as the particular router, the message is passed to the target network ID analysis part 52. When the message is directed to a different network appliance, the target network ID analysis part 52 extracts the address of a router to which the message should be passed next by referring to the all router information holding part 51 that holds information about all routers, and then forwards the message to the router on an appropriate route to the destination. In the case where the message is directed to an appliance on the other network connected to the particular router, the message is forwarded to the appliance.

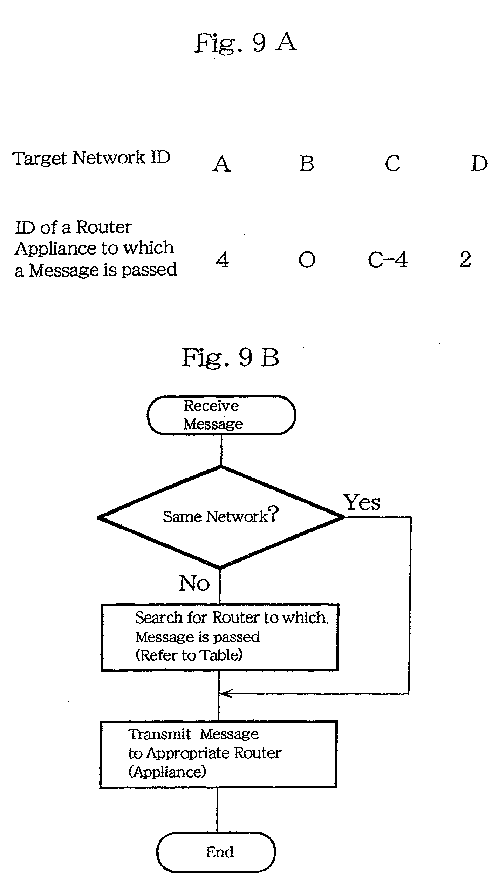

The all router information holding part 51 holds information about connections of all the networks and all the routers, such as those shown in Fig. 3, conceptually in a table form shown in Fig. 9A.

Therefore, when transmitting a message to a specific appliance on a network, the all router information holding part 51 is capable of deciding which route should be taken to transmit the message.

Fig. 9A shows a table for an appliance 3 of a router that belongs to a network B shown in Fig. 3 and is connected to a network C.

It is understood from Fig. 9A that when the target network is a network A, a message is passed to an appliance (router) 4 on the network B; when the target network is a network D, a message is passed to an appliance (router) 2 on the network B; and when the target network is the network C, a message is passed to an appliance 4 on the network C to which the appliance 3 is connected.

Fig. 9B is a flow chart showing how a router determines a destination in the above-described situation. When this particular router receives a message from an appliance on the network B, if the message is directed to another appliance on the same network as the particular router, the message is transmitted the another appliance, or if the message is directed to a different network appliance, the message is passed to an appliance to which the different network appliance is connected or to the appliance 4 on the network C to which the particular router is connected. In addition, when the message is directed to the particular router itself, data of the message is processed in the particular router, without forwarding to any appliances.

With respect to the message that has been forwarded to the different network appliance, the above-described procedures are repeated, and eventually the message is transmitted to a destination.

### EMBODIMENT 2

In the present embodiment, in response to a query from an appliance as to a destination of a message, a router notifies the querying appliance of a forwarding appliance which is on the most suitable route to a destination appliance for the message and which is on a network to which the querying appliance belongs.

In the foregoing Embodiment 1, an appliance always transmits a message to a particular router on the same network as the appliance, and thus it is possible that the processing load of this particular router increases in some cases, such as when all appliances transmit messages to appliances connected to different networks at a time of starting up a new network, router, or the like, or depending on the amount of information in messages. In view of this, the present embodiment differs from Embodiment 1 in that an appliance transmits a message directly to an appropriate appliance (or router).

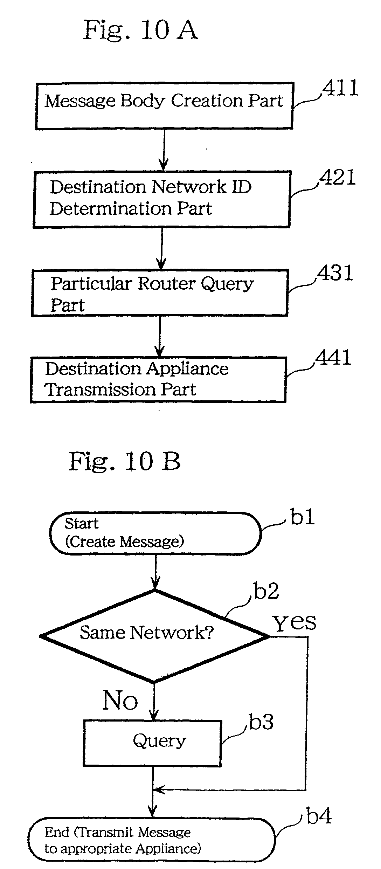

Fig. 10A shows a configuration of an appliance according to the present embodiment. In the figure, reference numeral 411 denotes a message body creation part in an application processing part, 421 a destination network ID determination part, 431 a particular router query part, and 441 a destination appliance transmission part.

Fig. 10B is a flow chart showing the transmission of a message conducted by an appliance.

The operation of the appliance will be described below with reference to Figs. 10A and 10B.

(b1) The message body creation part 411 creates a message such as one shown in Fig. 6B.

(b2) The destination network ID determination part 421 refers to the destination network ID of a message to determine whether the destination is an appliance on the same network as the source appliance, whether the destination is an appliance on a network to which an appliance connected to the source appliance belongs, or whether the destination is a different network appliance. When the destination is on the same network, the message is transmitted to an appropriate appliance (b4).

When the destination is an appliance on a network to which an appliance connected to the source appliance belongs, the message is transmitted to the appliance (b4).

(b3) When the destination is a different network appliance, the source appliance queries a particular router as to which of other appliances on the same network to transmit the message.

(b4) In accordance with an answer to the query, the message is transmitted to an appropriate appliance.

In an appliance that has received the message, similar processing is conducted as well except for the creation of a message (b), so that the message is eventually transmitted to the originally-intended destination appliance on a network.

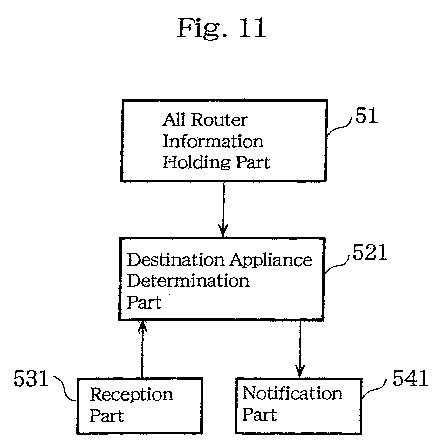

Fig. 11 shows a configuration of a particular router according to the present embodiment.

Fig. 11 is a configuration view of a particular router. In the figure, reference numeral 521 denotes a destination appliance determination part, 531 a reception part, and 541 a notification part.

When the reception part 531 receives a query from an appliance along with information about an ID of a destination network, the reception part 531 notifies the destination appliance determination part 521 of the query.

The destination appliance determination part 521 refers to an all router information holding part 51 to determine to which appliance the message should be passed, and then notifies the notification part 541 of the determination. The notification part 541 notifies a querying appliance of an ID of an appliance to which the message should be passed.

Thus, a home bus system can be operated without causing a processing queue or delay due to the concentration of processing in a particular router.

### EMBODIMENT 3

The present embodiment is such that information about routes is given, in advance, directly or indirectly to each appliance.

The purposes of a home bus system are limited to living a comfortable life, assuring security, saving energy, and the like, and also, the types of appliances associated with such purposes and sub-networks to which the appliances belong are limited.

Specifically, it is difficult for a desk lamp to serve as a router in terms of its price and communication means applicable thereto, and destinations of information about the operating conditions of the desk lamp are also limited. There is no relationship between the desk lamp and, for example, an electric washing machine, a temperature sensor, a gas sensor, and the like.

When a gas sensor transmits a message, the destination is at most a ventilating fan or other security appliances in a direct manner, and in an indirect manner, it is conceivable to give an alarm to family members by a display on a television receiver or to notify a control center through a telephone. However, it is totally unconceivable that the gas sensor notifies a facsimile or an electric washing machine to control such appliances in preferable operation modes.

Likewise, it is unconceivable in a common home bus system that a ventilating fan transmits information about its operating conditions to a temperature sensor.

Moreover, when a source appliance forwards information received from another appliance belonging to a sub-network controlled by the source appliance, to an appliance belonging to another sub-network, in some cases, a destination appliance or the type of the destination appliance can be identified from the type of the a source appliance. Specifically, when a ventilating fan or air conditioner forwards information received from a temperature sensor or gas sensor, the forwarding destination is limited to another ventilating fan or another air conditioner, or in some cases, to a telephone, a television receiver, or a radio that is used to send a predetermined alarm to family members.

Furthermore, appliances connected to the home bus system are almost fixed by the types of the appliances. Specifically, today in Japan, every household has a gas stove, a telephone, and a television receiver, and a certain proportion of the population owns a facsimile or the like. Every apartment has a gas sensor. In addition, every hospital room for 4-6 people or every room of Japanese inns has a sensor and a television receiver which is a rented one in many cases, except for luxurious Japanese inns.

In addition, every gas stove is equipped with a ventilating fan.

In view of this, at the time of manufacturing an appliance or at the time of installing a home bus system, the appliance is allowed to be provided, in advance, with the destination of and transmission means for transmitting information determined by the type and function of the appliance, i.e., a sub-network to which the appliance is to belong, the forwarding destination of received information, or the like.

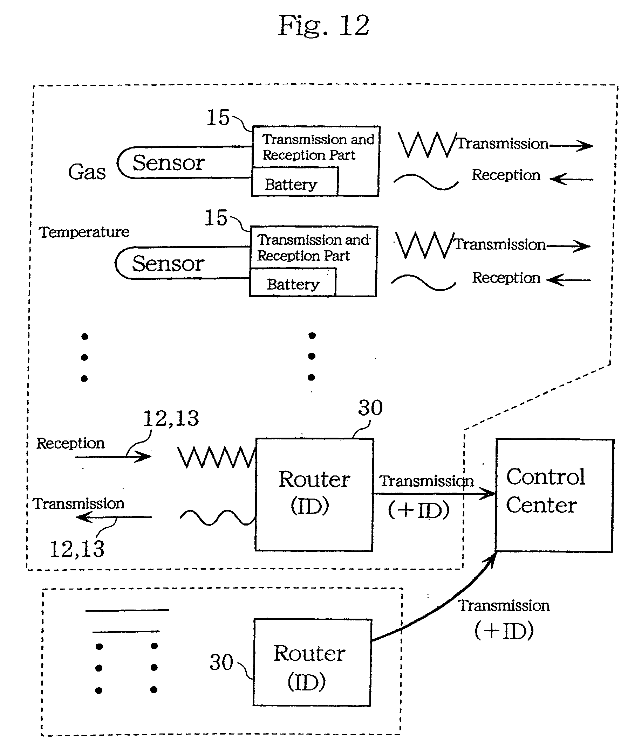

Specifically, in the case of a fire prevention system, a television receiver, a telephone, or the like in a room is equipped with a router. The router receives notification from a sensor by a communication medium (infrared rays, radio, specific wave lengths, or the like) that can be received only by the router, and then transmits the notification along with the ID of the router to a control center, thereby securing and controlling communication. This configuration is shown in Fig. 12. In the figure, reference numeral 15 denotes an attached-type (which does not require special communication lines or the like) and battery-operated type sensor.

Moreover, in the case where a home bus system has grades or the like, each appliance is allowed to be provided with the destination of transmitting information and the forwarding destination of received information, for each of the grades. As a result, the appliance acquires information about a grade or the like in some way at the time of start-up of the appliance, and thereafter the appliance transmits and forwards information in accordance with the grade.

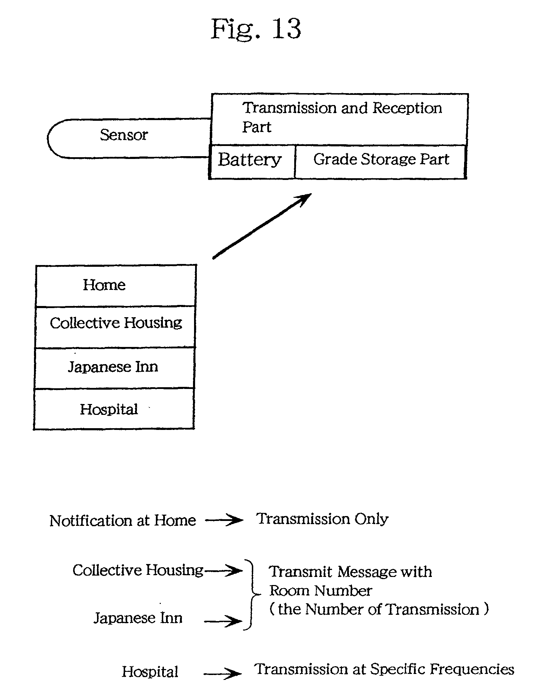

Such a configuration is shown in Fig. 13. In the figure, variations in transmitting information in accordance with each of the grades (operating environments) are shown. In the case of a hospital, transmission can be conducted at frequencies specified for control centers (in each department or on each floor), or with information having a priority processing code, or the number of transmission can be increased. This is of course applicable to household use depending on the improvements of living standards. For example, the grade of a Japanese inn such as periodical notification may be employed in addition to notification such that an appliance is on and off or the amount of information is above the limits.

### EMBODIMENT 4

The present embodiment relates to the purposes of a home bus system and the actual application of appliances.

In a home, since the amount of electricity usable at a time is limited, a fuse breaker, a non-fuse breaker, or the like is mounted to a port of an electric power line. In order to overcome the problem of the limitation, a home bus system may be employed. For example, a control means or a program for overcoming the problem is included in the CPU shown in Fig. 1.

Though some appliances such as a microwave oven and the like consume a large amount of electric power of around 600 watts, the electric power is eventually used to generate heat to the inside of a room. Therefore, during the operation of a microwave oven or the like, an electric heater for space heating may be turned off or operated at a low load.

In addition, some appliances such as an air conditioner, a microwave oven, and the like that consume a large amount of electric power of around 600 watts have no problems in terms of practical application even if the activation or actual activation of such appliances is delayed one or two seconds, possibly up to several seconds. Therefore, the CPU can control, during these periods of time, the operating conditions of other large power consuming appliances.

Consequently, in either case, when activating appliances that have characteristics of operation, application, and activation of a microwave oven or the like and that consume a large amount of electric power (a minimum of 100 watts or more, at least 200 watts in many cases, 300 watts or more in general), the operation of other appliances is controlled, whereby the amount of electric power consumed at a time can be kept within limits. On such occasion, when a routing processing device according to claims 1 or 2 is employed, not only equipment necessary for the appliances are simplified, but also the process for achieving the above-described purposes of a home bus system is securely conducted.

Thus, the present invention has been described with reference to a few embodiments, but it is to be understood that the present invention is not limited to the embodiments. For example, the present invention may have the following configurations.
1) An appliance transmits information directly to a destination appliance when the destination appliance is on the same network as the appliance, without allowing the information to pass through a specific router.
2) Some appliances have fixed target appliances, means, and data for transmission and reception. Accordingly, particular routers are made different by means of transmission such as infrared rays, an ultrasonic wave, and a power line. Or else, some appliances also function as particular routers.
3) Depending on information transmitted between, for example, a TV and a VTR, an appliance transmits the information directly to another appliance.
4) Each network has a three-dimensional or multi-dimensional connection, but not a two-dimensional connection. Specifically, for example, an air conditioner belongs to an air conditioning network and a power saving network. Therefore, there are a plurality of routes for transmitting a message.
5) The networks and appliances have a multi-level configuration, but not a two-level configuration. Specifically, several networks assemble to make up a high-level network, and some complex appliances have respective low-level appliances or the like. The several networks and the low-level appliances or the like have respective IDs corresponding to each stage. Moreover, even the high-level network and appliances have particular routers to conduct processing according to the present invention. Furthermore, such a system has started to be used not only for a home bus system used at home for care of the elderly or the like, but also for exchange messages between a plurality of only elderly households, or moreover between a plurality of regions and the whereabouts of helpers or doctors, or between each patient's room or each hospital ward and a nurse station(s).
6) Presently, various protocols and identification codes for various appliances are being studied and proposed. Therefore, various configurations different from those disclosed in the present application may be employed.
7) A particular router has the function of providing an identification code to a newly added network or appliance. Moreover, the particular router is not a router attached to an appliance but an appliance functioning exclusively as a router.

### INDUSTRIAL APPLICABILITY

As is clear from the above-described description, in the present invention, it is not necessary that individual appliances and routers grasp the network configuration, which leads to a cost reduction.

In addition, only an ID of a destination network and an ID of a destination appliance need to be written in a data region, and thus, it is not necessary that the application programmer grasp a network configuration to create a message having information about the network configuration, thereby facilitating the creation of a message.

Moreover, a source appliance queries a particular router as to a destination appliance on the same network as the source appliance, and then transmits a message to the destination appliance, thereby avoiding congestion at the particular router.

Furthermore, cost in installing sensors can be reduced.

In addition, communication for safety in an emergency can be secured and the process of the communication can also be improved.

## Claims

1. A routing processing device in a home bus system having a plurality of networks each provided with a unique ID, each of the networks having a plurality of appliances, each appliance being provided with an ID of a network to which the each appliance belongs, in which the networks are connected to one another by a router, via at least one appliance belonging to each of the networks,
wherein each of the appliances comprises at least a transmission part for transmitting, when the appliance transmits a message to another appliance not belonging to a network to which the appliance belongs, the message to a predetermined particular router on the network to which the appliance belongs, after having provided the message with an ID of a destination appliance and an ID of a network to which the destination appliance belongs, the particular router comprising:
a correspondence table part for showing a correspondence relationship between IDs of all the networks and IDs of the appliances belonging to each network, in the home bus system;
a connection correspondence table part for showing which networks are connected to each other via which appliance; and
a control part for forwarding, when received a message directed to another appliance on a network to which the particular router does not belong, the message to an appliance having a corresponding ID on a network to which the particular router is connected, by referring to the correspondence table part and the connection correspondence table part.

2. A routing processing device in a home bus system having a plurality of networks each provided with a unique ID, each of the networks having a plurality of appliances, each appliance being provided with an ID of a network to which the each appliance belongs, in which the networks are connected to one another by a router, via at least one appliance belonging to each of the networks,
wherein each of the appliances comprises:
a query part for querying, when the appliance transmits a message to another appliance not belonging to a network to which the appliance belongs, a predetermined particular router for to which one of the appliances on the network to which the appliance belongs the message is to be transmitted; and
a transmission part for transmitting the message to one of the appliances on the network to which the appliance belongs, the one of the appliances having an ID corresponding to an answer to the query, the particular router comprising:
a correspondence table part for showing a correspondence relationship between the IDs of all the networks and the IDs of the appliances belonging to each network;
a connection correspondence table part for showing which networks are connected to each other via which appliance; and
an ID notification part for notifying, when received a query from an appliance for to which one of the appliances on a network to which the querying appliance belongs a message is to be transmitted so that the message is transmitted to a destination appliance on a network to which the querying appliance does not belong, the querying appliance of an ID of a corresponding appliance, by referring to the correspondence table part and the connection correspondence table part.

3. A method of routing in a home bus system having a plurality of networks each provided with a unique ID, each of the networks having a plurality of appliances, each appliance being provided with an ID of a network to which the each appliance belongs, in which the networks are connected to one another by a router, via at least one appliance belonging to each of the networks, the method comprising at least:
transmitting, when the appliance transmits a message to another appliance not belonging to a network to which the appliance belongs, the message to a predetermined particular router on the network to which the appliance belongs, after having provided the message with an ID of a destination appliance and an ID of a network to which the destination appliance belongs, and
forwarding, when the particular router receives a message directed to another appliance on a network to which the particular router does not belong, the message to an appliance having a corresponding ID on a network to which the particular router is connected, by referring to a correspondence table part and a connection correspondence table part, the correspondence table part showing a correspondence relationship between the IDs of all the networks and the IDs of the appliances belonging to each network, in the home bus system, the connection correspondence table part showing which networks are connected to each other via which appliance.

4. A method of routing in a home bus system having a plurality of networks each provided with a unique ID, each of the networks having a plurality of appliances, each appliance being provided with an ID of a network to which the each appliance belongs, in which the networks are connected to one another by a router, via at least one appliance belonging to each of the networks, the method comprising:
querying, when the appliance transmits a message to another appliance not belonging to a network to which the appliance belongs, a predetermined particular router for to which one of the appliances on the network to which the appliance belongs the message is to be transmitted;
transmitting the message to one of the appliances on the network to which the appliance belongs, the one of the appliances having an ID corresponding to an answer to the query; and
notifying, when the particular router receives a query from an appliance for to which one of the appliances on a network to which the querying appliance belongs a message is to be transmitted so that the message is transmitted to a destination appliance on a network to which the querying appliance does not belong, the querying appliance of an ID of a corresponding appliance, by referring to a correspondence table part and a connection correspondence table part, the correspondence table part showing a correspondence relationship between the IDs of all the networks and the IDs of the appliances belonging to each network, the connection correspondence table part showing which networks are connected to each other via which appliance.

5. The routing processing device according to claim 1 wherein the each of the appliances is a sensor and attached to one of the particular router, a telephone, a television, and a video door-phone.

6. The routing processing device according to claim 2, wherein each of the appliances is a sensor and attached to one of the particular router, a telephone, a television, and a video door-phone.

7. The routing processing device according to claims 1 or 5, wherein the transmission part has means for transmitting a message to a particular router on a same network, the means using a communication medium receivable only by the particular router.

8. The routing processing device according to claims 2 or 6,
wherein each of the appliances is an appliance capable of using a plurality of communication media for transmission, and
wherein the ID notification part has a communication medium notification part for notifying, when received the query, the querying appliance of one of the plurality of communication media, as an ID of a corresponding appliance.

9. The routing processing device according to claims 1 or 2,
wherein the home bus system has means for controlling a total electric power consumed at a time, within a certain range,
wherein each of the appliances is an appliance resulting in contributing to heating an inside of a room, such as a microwave oven, an electric iron, an electric vacuum cleaner, or an electric heater, and
wherein a message from the appliance is directed to the means for controlling a total electric power and includes information on at least one of activation and deactivation of the appliance.

10. The routing processing device according to claims 1 or 2,
wherein the home bus system means for controlling a total electric power consumed at a time, within a certain range,
wherein each of the appliances is an appliance resulting in having no problem in practical application, such as a microwave oven, an electric iron, an electric vacuum cleaner, an electric heater, or an air conditioner, even if activation or actual activation of the appliance is delayed in the neighborhood of five seconds, and
wherein a message from the appliance is directed to the means for controlling a total electric power and includes information on at least one of activation and deactivation of the appliance.
